# EUROPÄISCHE PATENTSCHRIFT

(11) **EP 2 552 767 B1**
(45) Veröffentlichungstag und Bekanntmachung des Hinweises auf die Patenterteilung: **09.08.2017**
(21) Anmeldenummer: 11743951.3
(22) Anmeldetag: 25.03.2011
(51) Int. Cl.: B62J 7/08, B62J 9/00, B62J 7/04

(54) **FIXIER- BZW. ARRETIERUNGSSYSTEM FÜR EINE HALTEVORRICHTUNG**
FIXING AND/OR ARRESTING SYSTEM FOR A RETAINING ARRANGEMENT
SYSTÈME DE FIXATION OU DE BLOCAGE POUR UN DISPOSITIF DE MAINTIEN

(30) Priorität: 26.03.2010 DE 202010004309 U; 26.03.2010 DE 202010004311 U; 26.03.2010 DE 202010004310 U
(43) Veröffentlichungstag der Anmeldung: 06.02.2013
(73) Patentinhaber: Ortlieb Sportartikel GmbH, 91560 Heilsbronn (DE)
(72) Erfinder: ORTLIEB, Hartmut, 91560 Heilsbronn (DE); MARTIN, Gerd, 90584 Allersberg (DE); BOAS, Guenter, 91560 Heilsbronn (DE)
(74) Vertreter: Schuhmann, Albrecht
(86) Internationale Anmeldenummer: PCT/DE2011/000313
(87) Internationale Veröffentlichungsnummer: WO 2011/116757

(56) Entgegenhaltungen:
- WO-A1-2009/050520
- DE-A1- 10 340 877
- DE-U1-202008 002 164
- DE-U1-202010 004 309
- DE-U1-202010 004 310
- DE-U1-202010 004 311
- US-A- 5 609 278
- US-A1- 2009 152 423

## Beschreibung

Die vorliegende Erfindung betrifft ein Fixier- bzw. Arretierungssystem von Behältnissen an einer Befestigungsvorrichtung, insbesondere von Taschen, Koffern oder Rucksäcken an einem Träger wie einem Gepäckträger bei welchem wenigstens ein Befestigungselement an dem Träger angebracht ist und in wenigstens ein Aufnahmeelement eines Behältnisses eingreift und mit diesem lösbar arretiert wird.

Zum Mitführen von Behältnissen wie Taschen, Koffer, Rucksäcke oder dergleichen an z.B. einem Zweirad oder allgemein an einem Träger sind verschiedene Systeme bekannt um Taschen oder andere Behältnisse mit dem Träger, insbesondere Gepäckträger zu verbinden, bzw. an diesem anzubringen. Besonderer Beliebtheit erfreuen sich dabei Systeme bei welchen die Taschen lösbar und einfach an einem Gepäckträger befestigt, justiert und wieder abgenommen werden können.

Eine derartige Ausführung ist z.B. in der DE 4041460A1 offenbart, welche eine Tasche mit einer auf ihrer Rückseite angeordnete Schiene zeigt, welche mit Haken ausgerüstet ist mittels welchen sich die Tasche in die obere Strebe eines Gepäckträgers einhängen lässt. Derartige Schienen sind in Neuerungen als Rast- oder Schwenkhaken ausgebildet und arretieren die Befestigung. Auch diese Varianten benötigen sehr große, stabile Haken oder Haken mit großen Auslenkungen.

Auch in der DE 202006017966U1 ist eine Variante für eine solche Befestigung von Behältnissen an einen Gepäckträger gezeigt bei welcher zwei Haken an die Rückseite der Tasche fest befestigt sind und mittels welchen die Tasche an einem Gepäckträger befestigt werden kann.

Als Haltevorrichtung zum Anbringen von Behältnissen sind auch speziell dafür vorbereitete Träger, insbesondere Gepäckträger bekannt, welche über fest angeordnete Befestigungsstellen für Behältnisse, wie z.B. Taschen verfügen. Beispielhaft ist hier die WO 2006/086948A1 zu nennen, das alle Merkmalen des Oberbegriffs des Anspruch 1 offenbart, in welcher ein Gepäckträger gezeigt ist, welcher mit Befestigungselementen zum Anbringen von einem Behältnis ausgerüstet ist.
An solchen Punkten lässt sich eine Tasche, wie in der WO 2009/050520 beschrieben anbringen. Die hier genannte, sehr wuchtige, praktisch die komplette Rückseite der Tasche überdeckende oder an dieser angebrachten Aufnahmevorrichtung macht die Tasche zum einen deutlich schwerer und zum anderen erhält man eine Rückseite mit einer Vielzahl von vermutlich scharfkantigen Kanten, Ecken und Vertiefungen, was gerade nicht eine plane und glatte Rückseite der Tasche ist. Aufgrund von mehreren Befestigungspunkten am Träger, welche beim Anbringen der Tasche gleichzeitig in Eingriff gebracht werden müssen wird hier eine Lösung dafür angeboten. Die nach unten sehr breit auslaufenden, geraden Führungsnuten erleichtern das gleichzeitige Einführen der Aufnahmevorrichtung in die vier Befestigungspunkte da diese durch die breiten Bereiche mit Seitenwänden, welche entsprechend zusammenlaufen in die Befestigungselemente geführt werden.
Die an dem Gepäckträger zur Verfügung gestellten Aufnahmepunkte für entsprechende Gegenstücke an Taschen werden bei Neuerungen auch als nachträglich montierbare Elemente zur Montage an einem Gepäckträger ausgebildet, womit nicht der gesamte Gepäckträger als Zubehörteil benötigt wird.
Bei den bekannten Systemen erfolgt die Befestigung der Tasche oder eines anderen Behältnisses an einem Gepäckträger mittels wenigstens eines an der Tasche angebrachten Aufnahmepunktes, welcher mit wenigstens einem Befestigungs-Abnehmen vom Gepäckträger aufgrund der überstehenden Befestigungselemente nicht sehr komfortabel mitführen bzw. tragen. Weiter ist die Notwendigkeit einer, beim Anbringen der Tasche am Gepäckträger, nötigen gleichzeitigen Entriegelung, wie das Ziehen an einem Band oder ähnlichem nicht sehr komfortabel.

Aufgabe der vorliegenden Erfindung ist es eine Haltevorrichtung zum Anbringen von Behältnissen an einem Träger, insbesondere zum Anbringen von Packtaschen oder ähnlichen Behältnissen an einem Zweirad bzw. an einem Gepäckträger zu schaffen, welche die genannten Nachteile nicht aufweist. Insbesondere soll die Ausführung von auf der Rückseite glatten bzw. flachen Taschen möglich sein.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist ein Fixier- bzw. Arretierungssystem von Behältnissen an einer Befestigungsvorrichtung, insbesondere von Taschen, Koffern oder Rucksäcken an einem Träger wie einem Gepäckträger bei welchem ein Befestigungselement an dem Träger oder an einem Zubehörteil für den Träger angebracht ist und in ein Aufnahmeelement eines Behältnisses eingreift und mit diesem lösbar verbindbar ist, wobei das Aufnahmeelement mit einer Einbringung oder Führung für ein Befestigungselement ausgeführt ist, in welche das Befestigungselement einbringbar ist und dass das Aufnahmeelement über ein federbelastetes Mittel, mit einem Entriegelungs- bzw. Anlaufbereich an seiner Einlaufseite versehen ist und das Befestigungselement mittels dem federbelasteten Mittel in dem Aufnahmeelement verriegelbar ist und das federbelastete Mittel über eine Handhabe zur Entriegelung verfügt.

Durch diese, erfindungsgemäße Ausführung eines sehr kleinen, in der kompakten Einheit der Aufnahmevorrichtung vorgesehenen Schieber kann die Aufnahmevorrichtung sehr flach gehalten werden. Das eigentliche Gewicht der Tasche wird in der über dem Haken liegende stabilen Führungsplatte gehalten und muss nicht vom Schieber aufgenommen werden. Bei den bisher bekannten Haltevorrichtungen war eine Haltehaken zum einen sehr massiv ausgeführt und musste einen großen Stellbereich aufweisen um das Aufnahmeelement oder eine Strebe am Gepäckträger umgreifen zu können, was zu entsprechenden dicken, stark auftragenden Elementen auf der Rückseite der Tasche führte. In der bevorzugten Ausführung dient der Haken dazu, das Befestigungselement in der Aufnahmevorrichtung gegen Herausgleiten bzw. Herausspringen z.B. während der Fahrt zu sichern.

Die Aufnahmevorrichtung erlaubt das Positionieren der Tasche über dem, am Gepäckträger befindlichen Befestigungselement, wobei das Befestigungselement in der schienenartigen Ausführung der Aufnahmeeinheit geführt wird. Das Befestigungselement weist bevorzugt eine zylindrische Form auf und hat an seinem, der Tasche zugewandten Ende einen vergrößerten Durchmesser, welcher beim Einschieben des Befestigungselementes in das Aufnahmeelement hinter einer Platte des Aufnahmeelements geführt wird, wodurch die Tasche gehalten wird. Durch das Gewicht der Tasche oder leichten Druck auf die Tasche gleitet das Befestigungselement weiter in die Aufnahmevorrichtung und folgt z.B. einem abknickendem Verlauf, wobei es den Schieber zunächst nach oben wegdrückt. Nach umfänglichen Eintritt des Befestigungselements rückt der Schieber nach unten in den Bereich des Übergangs von geraden und abgewinkelten Verlauf und versperrt diesen Lauf für das Befestigungselement.

Grundsätzlich kann die Führung im Aufnahmeelement auch lediglich gerade ausgeführt werden und ein entsprechender, federbelasteter Schieber fährt hinter dem eingeführten Befestigungselement vor die Einführöffnung und blockiert diese. Der Schieber ist hierfür mit einem Anlauf- oder einem Entriegelungsbereich ausgerüstet, wobei das einzuführende Befestigungselement den Schieber beim Einlaufen zur Seite drückt und der Haken oder Schieber durch die Federbelastung nach kompletten Eintritt des Befestigungselementes wieder vorfährt und den Führungsbereich verriegelt.

Mittels einer Entriegelungshandhabe kann der Schieber oder der Haken manuell nach hinten bewegt werden wodurch der Einführbereich wieder freigegeben wird und das Behältnis abgenommen werden kann. Im Falle eines Schiebers, welcher in eine gerade Einführung greift ist für die Entriegelung ggf. eine geeignete Umlenkung vorzusehen.

Die Handhabe ist dabei bevorzugt als Griff der Tasche ausgeführt, womit beim Anziehen an dem Griff in angebrachter Position der Tasche an den Befestigungselementen die Arretierung entriegelt wird und ein Herausziehen der Tasche ermöglicht wird, was somit einhändig möglich ist.

Eine weitere Variante ist eine Aufnahmevorrichtung in der Ausführung als Einheit, welche eine Kasten- oder Wannen- förmige Ausgestaltung mit einem Rahmen aufweist, wobei in etwa eine Hälfte mit einer Abdeckung ausgerüstet ist unter welcher der Verschluss-, bzw. Arretier- Mechanismus angeordnet ist. Durch diese Ausgestaltung ist die Aufnahmevorrichtung sehr flach ausgeführt und kann bevorzugt in oder auf die Rückseite einer Tasche auf- oder eingeschweißt werden. Mögliche Varianten der An-, Auf-, oder Einbringung sind auch das Aufschrauben, Aufnieten mit oder ohne eine zusätzliche wasserdichte Abdichtung der Umläufe der Aufnahmevorrichtung um eine wunschgemäße Ausführung der Tasche als z.B. wasserdichte Tasche zu erhalten.

Das Grundelement kann dabei mit der Tasche wasserdicht verbunden sein und eine plane Oberfläche bilden. Über dieses Grundelement wird eine entsprechende Abdeckplatte, bevorzugt mit einer oder mehreren Führungseinrichtungen angeordnet und in geeigneter Weise verbunden. Zwischen dem Grundelement und der Abdeckplatte ist das wenigstens eine, federbelastete Element angeordnet. Das federbelastete Element ist selbstverriegelnd ausgeführt wobei der Riegel oder der Schieber beim Einführen beiseite, nach oben oder unten gedrückt wird.

Im Folgenden wird die Erfindung anhand von Zeichnungen beispielhaft näher beschrieben, dabei zeigen:
- Fig. 1: eine perspektivische Darstellung einer Aufnahmevorrichtung von vorne
- Fig.2: eine perspektivische Darstellung einer Aufnahmevorrichtung von hinten
- Fig. 3: eine perspektivische Ansicht einer Zusammenbauzeichnung
- Fig. 4: eine perspektivische Darstellung einer Aufnahmevorrichtung
- Fig. 5: eine perspektivische Darstellung eines Befestigungselement
- Fig. 6: eine Schnittdarstellung durch eine Aufnahmevorrichtung
- Fig. 7: eine Schnittdarstellung durch eine Aufnahmevorrichtung
- Fig. 8: eine perspektivische Ansicht einer Tasche
- Fig. 9: eine perspektivische Ansicht eines Gepäckträgers

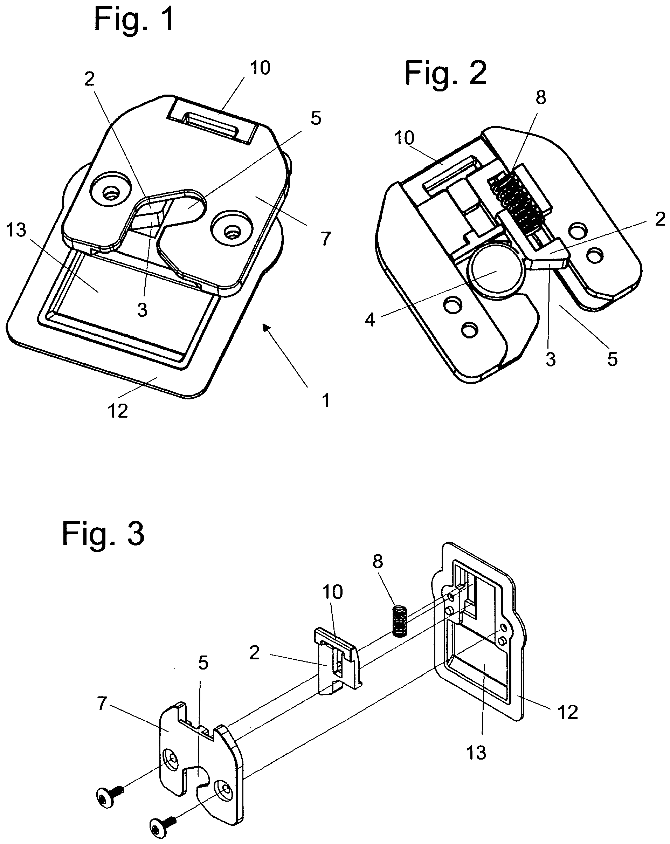

In Fig. 1 ist eine erfindungsgemäße Aufnahmevorrichtung 1 mit Fixier- bzw. Arretierungssystem gezeigt, mit welcher eine Tasche 16 ausrüstbar ist. Die hier gezeigte Ausführung weist einen Grundkörper 12 auf, welcher eine untere Einheit mit einem Rahmen 12 besitzt, welcher von einer oberen Einheit 7, welche mit einem Führungsverlauf 5, welcher als abknickender Schlitzausgeformt ist, überdeckt ausgerüstet ist. Zwischen dem Grundkörper und der oberen Platte 7 ist ein Schieber 2 angeordnet, welcher mit einer Feder 8 beaufschlagt ist, womit der Schieber nach unten gedrückt wird. In dieser Position des Schiebers 2 steht das untere Ende des Schiebers 2 in den Übergang des Führungsverlaufs 5 von seinem geraden Verlauf in den abgewinkelten Verlauf hinein.

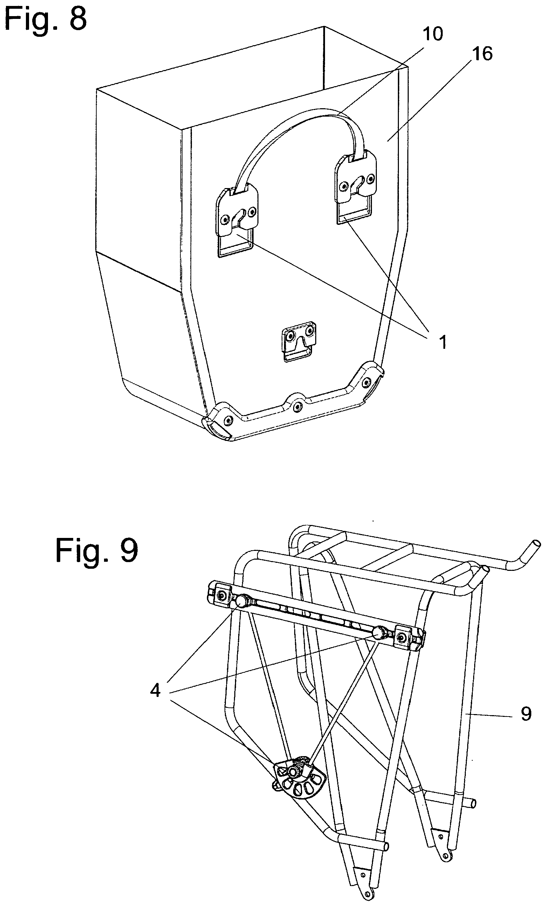

Wie in Fig. 2 gut zu erkennen ist, wird ein so in die Aufnahmevorrichtung 1 eingeführtes Befestigungselement 4, welches an einem Gepäckträger 9 oder an einem Zubehörteil an einem Gepäckträger angebracht ist, beim Einschieben zunächst den Schieber 2 gegen die Kraft der Feder 8 nach oben drücken womit das Befestigungselement 4 weiter in dem Führungsverlauf 5 in den abgewinkelten Teil einläuft. In der Endposition des Befestigungselements 4, am Ende des abgewinkelten Bereichs des Führungsverlaufs 5 ist für das untere Ende des Schiebers 2 Platz genug um vorbei am Befestigungselement 4, ausgelöst durch die Feder 8 nach unten bewegt zu werden, womit der Weg für das Befestigungselement 4 aus dem abgewinkelten Bereich in den geraden Verlauf blockiert ist. Durch Ziehen des Schiebers 2 an dessen Handhabe 10, welche, wie in Fig. 8 gezeigt ist, als Griff 10 an einer Tasche ausgeführt ist, nach oben, kann die Verriegelung gelöst werden und die Tasche vom Gepäckträger abgenommen werden.

Nach der beschriebenen Ausführung ist es möglich, die Tasche 16 zum einen sehr einfach an einem Gepäckträger 9 anzubringen, da nach positionieren, bzw. in Verbindung bringen der Befestigungselemente 4 mit der Aufnahmevorrichtung 1 an der Tasche 16 die Verriegelung selbstständig erfolgt, nur erzwungen durch das nach unten drückende Gewicht der Tasche und/oder leichtes Nachdrücken. Für die Anbringung der Tasche 16 an einem Gepäckträger 9 ist kein vorheriges oder während des Anbringens vorzunehmendes Entriegeln notwendig.

Ähnlich einfach lässt sich die Tasche 16 vom Gepäckträger 9 abnehmen, durch ziehen am Griff 10 der Tasche 16 wird beim Anheben der Tasche auch der Schieber 2 nach oben gezogen, womit die Verriegelung für das Befestigungselement freigegeben wird.

Bevorzugt ist die Handhabe 10 mit wenigstens zwei Aufnahmevorrichtungen verbunden um bevorzugt wenigstens zwei Aufnahmevorrichtungen gleichzeitig entriegeln zu können. Die Handhabe ist dabei bevorzugt mit dem Griff der Tasche oder als Griff der Tasche verbunden oder in diesen integriert.

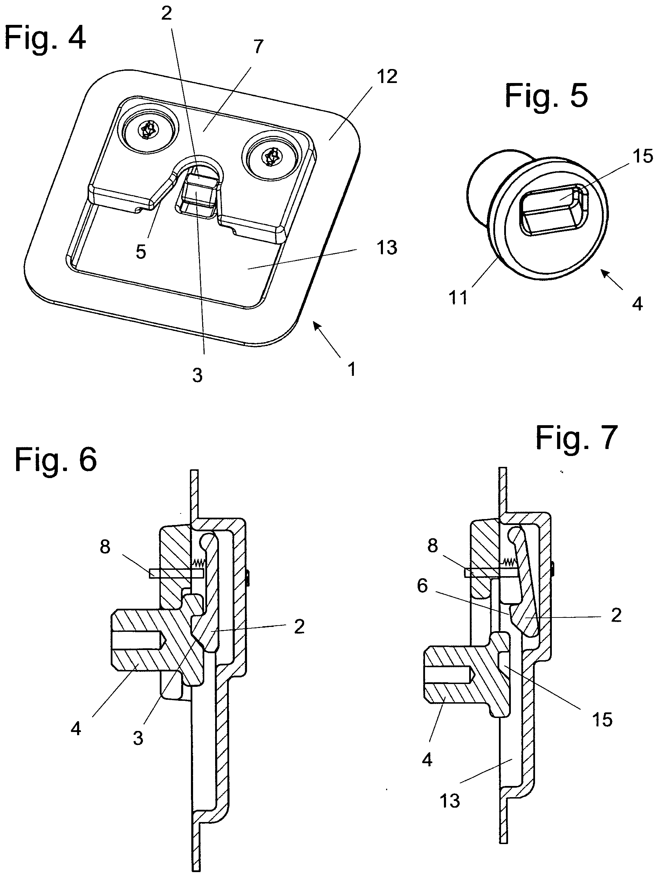

Die in Fig. 4 gezeigte Aufnahmevorrichtung 1 ist als wannenförmiges Element mit einem Rahmen 12 und einer Vertiefung 13, in welcher etwa hälftig unter einem Teil der Arretiermechanismus mit Haken 2 eingearbeitet und mit einer Platte 7 überdeckt ist, ausgebildet. Die so ausgebildete Aufnahmevorrichtung 1 kann in eine Tasche 16, wie in Fig. 8 gezeigt eingearbeitet werden und erlaubt die Lösung einer Tasche 16 mit nahezu planer Rückfläche, da die Mechanik sehr wenig aufträgt. Zur Befestigung der Tasche an einem Gepäckträger 9 ist dieser mit Befestigungselementen 4 ausgerüstet, welche sich mit der oder den Aufnahmevorrichtungen 1 an der Tasche 16 in Eingriff bringen lassen.
Die Tasche 16 wird dazu mit den Aufnahmeelementen 1 in eine geeignete Position bezüglich der Lage der Befestigungselemente 4 am Gepäckträger 9 gebracht bis die in ihrem Durchmesser vergrößerten Enden 11 der Befestigungselemente 4 in der Vertiefung 13, geführt von den Stegen 5 zwischen die Vertiefung 13 und der darüber liegenden Platte 7 geführt werden.
In Fig. 7 ist die Position der gerade angesetzten Aufnahmevorrichtung 1 gezeigt in welcher das Befestigungselement in die Vertiefung 13 geführt wird und das Befestigungselement 4 in die Führung 5 eingeschoben wird, womit der im Durchmesser vergrößerte Bereich 11 des Befestigungselements 4 hinter die Platte 7 greift. Das Befestigungselement 4 selbst ist, wie in Fig. 5 gezeigt, mit einer Vertiefung 15 an seiner Oberseite ausgeführt.
Beim Hineingleiten des Befestigungselements 4 hinter die Platte 7 drückt das Ende des Befestigungselements 4 den mit einer Feder in Richtung des eindringenden Befestigungselements 4 vorgespannten Hebel 2 zurück, bis die vordere Nase 6 des Hebels 2 in die Ausbuchtung 15 des Befestigungselements 4 einrastet, womit das Befestigungselement 4 mit der Aufnahmevorrichtung 1 arretiert ist und die Tasche nicht mehr nach oben abnehmbar ist, was in Fig. 6 zu sehen ist.

Zum Abnehmen der Tasche 16, bzw. der Befestigungselemente 4 von der Aufnahmevorrichtung 1 ist an der Aufnahmevorrichtung eine Handhabe 8 vorgesehen, mit welcher die Nase 6 des Hebels 2 gegen die Federspannung aus der Ausbuchtung 15 des Befestigungselements 4 gelöst wird und die Aufnahmevorrichtung 1 vom Befestigungselement 4 getrennt werden kann, bzw. die Tasche dadurch abgehoben werden kann. Idealer Weise ist die Handhabe 8 direkt oder über eine geeignete An- oder Umlenkung mit einem Haltegriff 10 an der Tasche verbunden, womit die Handhabung des Befestigens und Abnehmens der Tasche an einem Gepäckträger 9 sehr komfortabel ist, da beim Anziehen an dem Griff 10 die Arretierungen gelöst werden indem der Haken 2 bewegt wird und die Verriegelung freigibt.

## Patentansprüche

1. Fixier- bzw. Arretierungssystem von Behältnissen an einer Befestigungsvorrichtung, insbesondere von Taschen (16), Koffern oder Rucksäcken an einem Träger (9) wie einem Gepäckträger bei welchem ein Befestigungselement (4) an dem Träger (9) oder an einem Zubehörteil für den Träger (9) angebracht ist und in ein Aufnahmeelement (1) eines Behältnisses eingreift und mit diesem lösbar verbindbar ist, wobei das Aufnahmeelement (1) mit einer Einbringung oder Führungsverlauf (5) für das Befestigungselement (4) ausgeführt ist, in welche das Befestigungselement (4) einbringbar ist und dass das Aufnahmeelement (1) über einen federbelasteten Schieber (2), mit einem Entriegelungs bzw. Anlaufbereich (3) an seiner Einlaufseite versehen ist und das Befestigungselement (4) mittels dem federbelasteten Schieber (2) in dem Aufnahmeelement (1) verriegelbar ist und der federbelastete Schieber (2) über eine Handhabe (10) zur Entriegelung verfügt,
**dadurch gekennzeichnet,**
**dass** die Aufnahmevorrichtung (1) aus einem Grundkörper (12) besteht, welcher eine untere Einheit mit einem Rahmen besitzt, welcher von einer oberen Platte (7), welche mit einem Führungsverlauf (5), welcher als abknickender Schlitz ausgeformt ist, überdeckt ausgerüstet ist, wobei zwischen dem Grundkörper (12) und der oberen Platte (7) ein Schieber (2) angeordnet ist, welcher mit einer Feder (8) beaufschlagt ist, womit der Schieber (2) nach unten gedrückt wird, wobei in dieser Position des Schiebers (2) das untere Ende des Schiebers (2) in den Übergang des Führungsverlaufs (5) von seinem geraden Verlauf in den abgewinkelten Verlauf hinein steht.

2. Fixier- bzw. Arretierungssystem nach Anspruch 1,
**dadurch gekennzeichnet,**
**dass** der federbelastete Schieber (2) in einer Position wenigstens teilweise in den Übergang von dem abgewinkelten Verlauf in den geraden Verlauf des Führungsverlaufs (5) hineinragt.

3. Befestigungs- bzw. Arretierungssystem nach Anspruch 1,
**dadurch gekennzeichnet,**
**dass** das Befestigungselement (4) im Wesentlichen als Zylinder förmiger Knopf, mit einem am Ende vergrößerten Durchmesser ausgeführt ist.

4. Befestigungs- bzw. Arretierungssystem nach Anspruch 1,
**dadurch gekennzeichnet,**
**dass** das Aufnahmeelement (1) in ein Behältnis (16) eingeschweißt ist.

5. Befestigungs- bzw. Arretierungssystem nach Anspruch 1,
**dadurch gekennzeichnet,**
**dass** das Aufnahmeelement (1) auf ein Behältnis (16) aufgeschweißt ist.

6. Befestigungs- bzw. Arretierungssystem nach Anspruch 1,
**dadurch gekennzeichnet,**
**dass** das Aufnahmeelement (1) auf ein Behältnis (16) aufgeschraubt oder aufgenietet ist.

7. Befestigungs- bzw. Arretierungssystem nach Anspruch 1,
**dadurch gekennzeichnet,**
**dass** das Aufnahmeelement (1) mit dem Behältnis (16) wasserdicht verbunden ist.

8. Befestigungs- bzw. Arretierungssystem nach Anspruch 1,
**dadurch gekennzeichnet,**
**dass** der federbelastete (8) Schieber (2) im Aufnahmeelement (1) mit einer von außen bedienbaren Handhabe (10) entriegelbar ausgeführt ist.

9. Befestigungs- bzw. Arretierungssystem nach Anspruch 1 und 8,
**dadurch gekennzeichnet,**
**dass** der federbelastete (8) Schieber (2) im Aufnahmeelement (1) mit einer von außen bedienbaren Handhabe (10), welche als Griff oder Bedienlasche der Tasche (16) ausgeführt ist, entriegelbar ist.

10. Befestigungs- bzw. Arretierungssystem nach Anspruch 1,
**dadurch gekennzeichnet,**
**dass** ein mit dem Arretierungssystem ausgeführtes Behältnis (16) eine flache, plane, dem Gepäckträger (9) oder einer tragenden Person zugewandte Rückseite aufweist.

11. Befestigungs- bzw. Arretierungssystem nach Anspruch 1,
**dadurch gekennzeichnet,**
**dass** das Aufnahmeelement (1) als Einheit mit einem Grundkörper (12), einem offenen Bereich (13) und einem Führungsverlauf (5) in der oberen Platte (7) zum Einbringen des Befestigungselements (4) ausgeführt ist.

## Claims

1. A fixing or locking system for containers on an attachment device, in particular for pockets (16), bags or rucksacks, on a carrier (9), such as a luggage carrier, in which a attachment element (4) is attached to the carrier (9), or to an accessory for the carrier (9), and engages in a receiving element (1) of a container, and by this means can be detachably connected, wherein the receiving element (1) is embodied with an introductory element or guide profile (5) for the attachment element, into which the attachment element (4) can be introduced, and that the receiving element (1) via a spring-loaded slider (2) is provided on its inlet side with an unlocking or approach zone (3) and the attachment element (4) can be locked in the receiving element (1) by means of the spring-loaded slider (2), and the spring-loaded slider (2) has a handle (10) for unlocking purposes,
**characterised in**
**that** the receiving device (1) consists of a base body (12), which possesses a lower unit with a frame, which is equipped with an upper plate (7), which is overlaid with a guide profile (5), which is shaped as a bent slot, wherein a slider (2) is arranged between the base body (12) and the upper plate (7), which slider is acted upon by a spring (8), whereby the slider (2) is pushed downwards, wherein in this position of the slider (2) the lower end of the slider (2) projects into the transition of the guide profile (5) from its straight profile into the angled profile.

2. The fixing or locking system in accordance with claim 1,
**characterised in**
**that** the spring-loaded slider (2) in one position protrudes at least partially into the transition from the angled profile into the straight profile of the guide profile (5).

3. The attachment or locking system in accordance with claim 1,
**characterised in**
**that** the attachment element (4) is essentially embodied as a cylindrical button, with an enlarged diameter at the end.

4. The attachment or locking system in accordance with claim 1,
**characterised in**
**that** the receiving element (1) is welded into a container (16).

5. The attachment or locking system in accordance with claim 1,
**characterised in**
**that** the receiving element (1) is welded onto a container (16).

6. The attachment or locking system in accordance with claim 1,
**characterised in**
**that** the receiving element (1) is screwed or riveted onto a container (16).

7. The attachment or locking system in accordance with claim 1,
**characterised in**
**that** the receiving element (1) is connected with the container (16) in a watertight manner.

8. The attachment or locking system in accordance with claim 1,
**characterised in**
**that** the spring-loaded (8) slider (2) is embodied in the receiving element (1) such that it can be unlocked with an externally operable handle (10).

9. The attachment or locking system in accordance with claim 1 and 8,
**characterised in**
**that** the spring-loaded (8) slider (2) is embodied in the receiving element (1) such that it can be unlocked with an externally operable handle (10), which is embodied as a grip or an operating tab of the pocket (16).

10. The attachment or locking system in accordance with claim 1,
**characterised in**
**that** a container (16) embodied with the locking system has a flat, plane rear face facing towards the luggage carrier (9) or a person carrying the latter.

11. The attachment or locking system in accordance with claim 1,
**characterised in**
**that** the receiving element (1) is embodied as a unit with a base body (12), an open zone (13) and a guide profile (5) in the upper plate (7) for purposes of introducing the attachment element (4).

## Revendications

1. Système de fixation ou de blocage de réceptacles sur un dispositif de fixation, en particulier de sacs, (16), valises ou sacs à dos sur un support (9) comme un porte-bagages, dans lequel un élément de fixation (4) est installé sur le support (9) ou sur une pièce accessoire pour le support (9) et s'engrène dans un élément récepteur (1) d'un réceptacle et peut être rallié à celui-ci de manière dissociable, dans lequel l'élément récepteur (5) est réalisé avec un système d'introduction ou un parcours de guidage (5) pour l'élément de fixation (4) dans lequel l'élément de fixation (4) peut être introduit et que l'élément récepteur (1) est pourvu par l'intermédiaire d'un curseur chargé par ressort (2) d'une zone de déverrouillage ou d'entrée (3) sur sa face entrée et que l'élément de fixation (4) est verrouillable au moyen du curseur chargé par ressort (2) dans l'élément récepteur (1) et que le curseur chargé par ressort (2) dispose d'un élément de préhension (10) pour le déverrouillage,
**caractérisé en ce**
**que** le dispositif récepteur (1) est composé d'un corps de base (12) qui possède une unité inférieure dotée d'un cadre qui est équipé en recouvrement d'une plaque supérieure (7) dotée d'un parcours de guidage (5) qui est conformé sous forme d'une fente coudée, sachant que, entre le corps de base (12) et la plaque supérieure (7), est disposé un curseur (2) qui est sollicité par un ressort (8), ce qui fait que le curseur (2) est comprimé vers le bas, sachant que, dans cette position du curseur (2), l'extrémité inférieure du curseur (2) se trouve dans la transition du parcours de guidage (5) de son orientation rectiligne vers son orientation coudée.

2. Système de fixation ou de blocage selon la revendication 1,
**caractérisé en ce**
**que** le curseur chargé par ressort (2) déborde dans une position du moins partiellement dans la transition entre l'orientation coudée vers l'orientation rectiligne du parcours de guidage (5).

3. Système de fixation ou de blocage selon la revendication 1,
**caractérisé en ce**
**que** l'élément de fixation (4) est réalisé sensiblement sous forme d'un bouton de forme cylindrique doté d'un diamètre agrandi à l'extrémité.

4. Système de fixation ou de blocage selon la revendication 1,
**caractérisé en ce**
**que** l'élément récepteur (1) est soudé dans un réceptacle (16).

5. Système de fixation ou de blocage selon la revendication 1,
**caractérisé en ce**
**que** l'élément récepteur (1) est soudé sur un réceptacle (16).

6. Système de fixation ou de blocage selon la revendication 1,
**caractérisé en ce**
**que** l'élément récepteur (1) est vissé ou riveté sur un réceptacle (16).

7. Système de fixation ou de blocage selon la revendication 1,
**caractérisé en ce**
**que** l'élément récepteur (1) est raccordé au réceptacle (16) de manière étanche à l'eau.

8. Système de fixation ou de blocage selon la revendication 1,
**caractérisé en ce**
**que** le curseur (2) chargé par ressort (8) est réalisé de manière à être déverrouillable dans l'élément récepteur (1) avec un élément de préhension (10) actionnable de l'extérieur.

9. Système de fixation ou de blocage selon les revendications 1 et 8,
**caractérisé en ce**
**que** le curseur (2) chargé par ressort (8) est déverrouillable dans l'élément récepteur (1) avec un élément de préhension (10) actionnable de l'extérieur réalisé sous forme d'une poignée ou d'une languette d'utilisation du sac (16).

10. Système de fixation ou de blocage selon la revendication 1,
**caractérisé en ce**
**qu'**un réceptacle réalisé avec le système de blocage (16) présente une face arrière plate et plane tournée vers le porte-bagages (9) ou vers une personne qui le porte.

11. Système de fixation ou de blocage selon la revendication 1,
**caractérisé en ce**
**que** l'élément récepteur (1) est réalisé sous forme d'une unité dotée d'un corps de base (12), d'une partie ouverte (13) et d'un parcours de guidage (5) dans la plaque supérieure (7) pour l'introduction de l'élément de fixation (4).
